# NEUE EUROPÄISCHE PATENTSCHRIFT

(11) **EP 2 342 156 B2**
(45) Veröffentlichungstag und Bekanntmachung des Hinweises auf die Entscheidung über den Einspruch: **26.04.2023**
(45) Hinweis auf die Patenterteilung: 15.03.2017
(21) Anmeldenummer: 09778138.9
(22) Anmeldetag: 27.08.2009
(51) Int. Cl.: B67C 3/20, B67C 3/28, G01G 15/00, G01G 17/00, G01G 23/37

(54) **MULTIFINGERWAAGE**
MULTIFINGERED SCALE
BALANCE À DOIGTS MULTIPLES

(30) Priorität: 24.09.2008 DE 102008048774
(43) Veröffentlichungstag der Anmeldung: 13.07.2011
(73) Patentinhaber: KHS GmbH, 44143 Dortmund (DE)
(72) Erfinder: HERRMANN, Jürgen, 57520 Rosenheim (DE); HECKTOR, Jan Peter, 56191 Weitersburg (DE)
(86) Internationale Anmeldenummer: PCT/EP2009/006199
(87) Internationale Veröffentlichungsnummer: WO 2010/034388

(56) Entgegenhaltungen:
- EP-A1- 0 636 574
- EP-A1- 1 111 352
- WO-A1-94/20365
- DE-A1- 2 008 232
- DE-A1-102005 006 733
- JP-A- 2000 249 591
- US-A- 2 753 039
- US-A- 2 778 480
- US-A- 4 437 561

## Beschreibung

Die Erfindung betrifft eine Messeinrichtung gemäß dem Oberbegriff des Anspruchs 1, und wie aus der US 4 437 561 A bekannt, und eine Abfüllanlage mit einer solchen Messeinrichtung.

Behälter können in der Art von Flaschen oder dergleichen für Flüssigkeiten, beispielsweise für Getränke verwendet werden. Die Behälter können aus einem transparenten oder transluzentem Material, beispielsweise aus Glas oder aus einem transluzenten Kunststoff, z.B. PET oder auch aus einem Blech bestehen. Die Behälter werden zum Beispiel einer Abfüllanlage zugeführt, in welcher diese mit einem Füllgut befüllt werden, und nach dem Füllen verschlossen werden.

Bei dem Befüllen der Behälter ist sicherzustellen, dass ein jeder Behälter gemäß Eichvorgaben mit der erforderlichen Menge an Füllgut befüllt wird, wobei natürlich auch sichergestellt werden muss, den jeweiligen Behälter nicht mit einer Mehrmenge zu überfüllen.

Um festzustellen, ob der Behälter mit der erforderlichen Menge an Füllgut befüllt ist, ist es bekannt, eine Füllhöhenkontrolle durchzuführen. Hierbei durchlaufen die jeweiligen Behälter eine Inspektionsvorrichtung, welche die Behälter z.B. im Bereich ihres Flaschenhalses beispielsweise durchleuchten und entsprechende Daten z.B. mittels einer CCD-Kamera aufnehmen. In einer Auswerte- und Steuereinheit werden die aufgenommenen Ist-Daten mit Soll-Daten verglichen, so dass unter- bzw. überfüllte Behälter aussortiert werden können. Wichtig ist auch, dass diese Inspektion nicht stichprobenartig erfolgt, sondern, dass ein jeder Behälter entsprechend kontrolliert wird. In diesem Zusammenhang sind auch Sensoranordnungen mit Sender und Empfänger bekannt.

Bekannt ist weiter, dass beispielsweise kohlensäurehaltige Füllgüter aufgeschäumt werden, um zu erreichen, dass ein Verschließen der Behälter nach erfolgter Luftverdrängung im Behälterkopfraum erfolgt. Dadurch wird eine Beeinträchtigung des Füllgutes durch Sauerstoff innerhalb der verschlossenen Behälter vermieden. Denkbar ist natürlich, dass auch Füllgüter, welche keiner besonderen Aufschäumprozedur unterzogen wurden, gleichfalls einer Schaumbildung unterliegen.

Durch die Schaumbildung können jedoch die bezüglich der Füllstandskontrolle durchgeführten optischen Daten bzw. Sensordaten verfälscht werden, so dass unter- bzw. überfüllte Behälter als normgerecht angesehen werden könnten, obwohl diese eigentliche aussortiert werden sollten. Denkbar ist natürlich auch, dass normgerecht gefüllte Behälter aussortiert werden könnten. Weiter unterliegen die Behälter, beispielsweise Flaschen gewissen Formtoleranzen, so dass auch diese zu einem unzuverlässigen Inspektionsergebnis führen könnten.

Denkbar ist weiter, eine Füllmengenkontrolle mittels Wägung der befüllten Behälter durchzuführen. Hierzu könnten die einzelnen Behälter aus dem Behälterstrom entnommen, also vereinzelt werden, und z.B. mittels einer gesonderten Haltevorrichtung gewogen werden. Sind nun das spezifische Gewicht des Füllgutes und das Gewicht des Leerbehälters bekannt, kann auf die eingefüllte Füllgutmenge geschlossen werden. Ergibt sich ein Mehr- bzw. Untergewicht bezogen auf jeweilige Referrenzdaten, kann der betreffende Behälter aussortiert werden. Als Hauptnachteil bei diesem Vorgehen ist aber anzusehen, dass der Behälterstrom unterbrochen wird, um die Behälter vereinzelt zu wiegen. Dies aus dem Grunde, als Abfüllanlagen heutzutage einen Durchsatz von ca. 60.000 Behältern pro Stunde aufweisen. Eine Unterbrechung des Behälterstroms führt so zu erheblichen zeit- und damit wirtschaftlichen Verlusten.

Beispielsweise die DE 103 01 844 A1 offenbart eine Füllmaschine, bei welcher zunächst die leeren, und nach dem Befüllen die gefüllten Behälter gewogen werden. Hierzu besteht ein Zuführtransporteur aus zwei Teilen, zwischen denen eine Waage angeordnet ist. Die Behälter werden von dem ersten Teil des Zuführtransporteurs mit geeigneten Mitteln auf die Waage gebracht, wobei nicht genauer beschrieben ist, wie dies geschieht. Wie oben beschrieben, werden die Behälter wohl mittels einer Haltevorrichtung angehoben und auf die Waage gesetzt, um den Behälter nach der Wägung in wohl derselben Art an den zweiten Teil des Zuführtransporteurs zu überbringen. Dadurch wird aber der Behälterfluss wohl unterbrochen. Die gewogenen Leerbehälter werden mittels Füllvorrichtungen befüllt, und anschließend mit einem Abtransporteur ausgeleitet. Der Abtransporteur ist analog zum Zuführtransporteur aus zwei Teilen gebildet, zwischen denen eine zweite Waage zum Wiegen der befüllten Behälter angeordnet ist. Auch hierbei scheint der jeweilige Behälter mittels gesonderter Haltevorrichtungen auf die Waage gebracht und wieder entfernt zu werden, so dass der Behälterfluss wohl abermals unterbrochen wird. Um eine Messung bei einer hohen Transportgeschwindigkeit zu erreichen, also den Behälterfluss eben nicht zu unterbrechen, schlägt die DE 103 01 844 A1 daher vor, einzelne Behälter aus dem Behälterfluss auszuschleusen. Die ausgeschleusten Behälter werden einer neben dem Abtransporteur angeordneten Messstelle zugeführt. Dadurch ist allerdings keine kontinuierliche Füllmengenkontrolle eines jeden Behälters mehr möglich, sondern lediglich eine stichprobenartige Füllmengenkontrolle.

Der Erfindung liegt daher die Aufgabe zugrunde, eine Messeinrichtung der eingangs genannten Art mit einfachen Mitteln so zu verbessern, dass ein jeder Behälter ohne den Behälterfluss zu unterbrechen einer Füllmengenkontrolle unterzogen werden kann, wobei gleichzeitig, beispielsweise unabhängig von einer Schaumbildung oder von Behältertoleranzen zuverlässige Messdaten erreichbar sind.

Erfindungsgemäß wird die Aufgabe durch eine Messeinrichtung mit den Merkmalen des Anspruchs 1 gelöst.

Mit der Erfindung wird eine kontinuierliche Füllmengenkontrolle eines jeden Behälters zur Verfügung gestellt, bei welcher die Behälter nicht vereinzelt oder von einem gesonderte Halteelement erfasst werden müssen. Vielmehr wird vorteilhaft eine Messeinrichtung zur Verfügung gestellt, bei welcher die jeweiligen Behälter mit der dem Behälterfluss bevorzugt gleichen Geschwindigkeit gewogen werden können, wobei eine eventuelle Schaumbildung und Behältertoleranzen das resultierende Messergebnis nicht beeinträchtigen. Weiter können mit der Messeinrichtung mehrere Behälter gleichzeitig gewogen werden, wobei für jeden Behälter ein zuverlässiges Messergebnis erreichbar ist.

Vorteilhaft können die Behälter von der Ausführvorrichtung oder von einem dieser nachgeschalteten Stetigförderer mit der dem Behälterfluss bevorzugt gleichen Geschwindigkeit auf die Messeinrichtung übergeben werden, wobei die Messeinrichtung die Behälter mit der entsprechenden Geschwindigkeit von der Einlassseite zur Auslassseite transportiert. Auslassseitig werden die Behälter dann mit der entsprechenden Geschwindigkeit an einen nachgeschalteten Transporteur (vorzugsweise Stetigförderer) übergeben.

Die Messaufnehmer sind quer zur Transportrichtung angeordnet, und in Transportrichtung gesehen zueinander jeweils beabstandet. Die Messaufnehmer können in einer Transportrichtung gesehenen Breite an die Aufstandsfläche (Boden) des Behälters angepasst sein, so dass nur jeweils ein Behälter auf einem Messaufnehmer aufsteht. Da in einer Abfüllanlage aber unterne der Erfindung die Messaufnehmer universell als schmale Stäbe mit bevorzugt ebener Aufstandsfläche so auszuführen, dass ein Behälter auf mehreren Messaufnehmern aufsteht. Günstig wäre dabei, wenn die Aufstandsfläche des Behälters, also dessen Boden, zumindest in Umfangsrichtung gesehen nicht unterbrochen wäre.

Die Messaufnehmer sind als Messfinger ausgeführt, so dass eine Multifinger-Messeinrichtung gebildet ist, wobei die einzelnen Messfinger so beabstandet sind, dass quasi ein Laufband mit Obertrum und Untertrum gebildet ist.

Um das Gewicht der aufstehenden Behälter aufnehmen zu können, sind alle Messaufnehmer mit Messelementen versehen bzw. verbunden, welche eine Belastung, also zum Beispiel eine Durchbiegung, eine Dehnung oder eine Kraft in der Längsachse (quer zur Transportrichtung) oder ein vergleichbares Signal der Messaufnehmer bzw. der einzelnen Messfinger detektieren können. Derartige Messelemente können beispielsweise als Druckmessdose oder als Dehnungsmessstreifen ausgeführt sein. An jedem Messaufnehmer ist ein Messelement angeordnet, so dass das Gewicht des auf mehreren Messaufnehmern aufstehenden Behälters aufgenommen werden und diesem zugeordnet werden kann. Dies ist deswegen vorteilhaft, als die Behälter so nicht mit einem vorgegebenen Abstand auf die Messeinrichtung überführt werden müssen, sondern lediglich in einer minimalen, ungeordneten Beabstandung zueinander transportiert und gewogen werden können. Alternativ, doch kein Teil der Erfindung, ist auch denkbar, die Belastung (z.B. Einfederung bzw. Durchbiegung) der Messaufnehmer mit einem stationärem (also einem nicht umlaufenden) Messelement aufzunehmen. Hierbei wird vorteilhaft auf eine Belastungsaufnahme der einzelnen Finger verzichtet, wobei beispielhaft die Einfederung bzw. Durchbiegung von nachgiebigen Messaufnehmern mittels eines einzelnen stationären Messelementes aufgenommen wird, welches bevorzugt in unmittelbarer Nähe zu den umlaufenden Messaufnehmern angeordnet ist.

Erfindungsgemäß sind die die Messelemente mit einer Auswerteeinheit verbunden, so dass nicht eichgerecht gefüllte Behälter erkannt werden können. Hierzu sind in der Auswerteeinheit Soll-Daten betreffend des jeweiligen Füllgutes und des betreffenden Behältertyps abgelegt, so dass ein Vergleich mit den aufgenommenen Ist-Daten die notwendige und zuverlässige Entscheidungsgrundlage bezüglich eines eichgerecht gefüllten Behälters liefert.

Erkennt die Auswerteeinheit, dass einer der Behälter nicht eichgerecht gefüllt, also unterfüllt oder überfüllt ist, wird ein entsprechendes Signal an eine Aussortiereinrichtung gesendet, welche den entsprechenden Behälter aus dem Behälterfluss entnimmt bzw. aussortiert. Erfindungsgemäß werden die entsprechenden Behälter auf der Messeinrichtung aussortiert. Zweckmäßiger weise sind die Messaufnehmer hierzu quer zur Transportrichtung verlagerbar bzw. verschieblich gelagert, so dass der betreffende Behälter durch ein Verschieben der entsprechenden Messaufnehmer aus dem Behälterfluss aussortiert werden kann. Die Auswerteeinheit kann hierzu ein entsprechendes Signal bevorzugt an eine Steuereinrichtung leiten, welche ein Verschieben bzw. Verlagern der betreffenden Messaufnehmer bewirkt. Der "zur Seite" gestellte Behälter wird dabei zunächst in Transportrichtung weitertransportiert und auslassseitig entfernt, wozu auslassseitig eine entsprechende Aussortiervorrichtung, z.B. in der Ausgestaltung eines Ausleitelementes angeordnet sein kann.

Um zu erreichen, dass die Behälter geradlinig, also in einer Linie aufeinander folgend auf der Messeinrichtung transportiert werden können, und so stets auf dem gleichen Abschnitt der jeweiligen Messaufnehmer aufstehen, ist zumindest eingangsseitig ein Führungselement vorgesehen. Das Führungselement weist in bevorzugter Ausgestaltung zwei zueinander in Querrichtung der Messeinrichtung beabstandet angeordnete Führungsbacken auf, welche so beabstandet sind, dass ein Transport von in Querrichtung der Messeinrichtung nebeneinander stehenden Behälter vermieden ist. Natürlich können die Führungsbacken verstellbar ausgeführt sein, so dass diese an Behälter unterschiedlichster Ausgestaltungen, insbesondere in deren Umfangsrichtung gesehen anpassbar verstellbar sind. In günstiger Ausgestaltung ist auch auslassseitig ein solches, entsprechend ausgeführtes Führungselement angeordnet. Dieses kann zudem die aussortierten, also der "zur Seite" gestellten Behälter ausleiten.

Natürlich liegt es im Sinne der Erfindung, wenn mit einer weiteren Messeinrichtung das Leergewicht der Behälter vor deren Befüllung aufgenommen wird. Hierzu ist die dann zweite Messeinrichtung der Zuführvorrichtung bzw. einem dieser vor geschalteten Stetigförderer zugeordnet. Das detektierte Leergewicht wird in der Auswerteeinheit abgelegt. Erreicht derselbe, aber gefüllte Behälter nun die der Ausführseite zugeordnete Messeinrichtung, wird dessen Gesamtgewicht aufgenommen, so dass durch einfache Relation der beiden aufgenommen Gewichtsdaten das exakte Füllvolumen mit der Auswerteeinheit detektierbar ist. Die Messeinrichtung kann natürlich auch das bzw. die Führungselemente aufweisen.

Die Abfüllanlage kann als Linearanlage mit linearen Bandanlagen oder als rotierende Anlage ausgeführt sein. Bei der rotierenden Bauart sind ein Zulaufstern, ein Abfüllstern und ein Ausführstern vorgesehen. Die Behälter werden dem Zuführstern über einen Stetigförderer zugeführt, wobei ein solcher Stetigförderer auch dem Ausführstern zugeordnet sein kann. Die jeweiligen Messeinrichtungen können bevorzugt dem jeweiligen Stetigförderer zugeordnet sein.

Selbstverständlich soll die Messeinrichtung nicht auf die Verwendung an einer Abfüllanlage beschränkt sein.

Weitere vorteilhafte Ausgestaltungen der Erfindung sind in den Unteransprüchen und der folgenden Figurenbeschreibung offenbart. Es zeigen
Fig. 1 eine Abfüllanlage in prinzipieller Ansicht mit einer Messeinrichtung,
Fig. 2 die Messeinrichtung aus Figur 1 in einer perspektivischen Ansicht,
Fig. 3 die Messeinrichtung aus Figur 1 in einer Seitenansicht,
Fig. 4 die Messeinrichtung aus Figur 1 in einer Draufsicht, und
Fig. 5 die Messeinrichtung aus Figur 1 in einer Frontalansicht.

In den unterschiedlichen Figuren sind gleiche Teile stets mit denselben Bezugszeichen versehen, weswegen diese in der Regel auch nur einmal beschrieben werden.

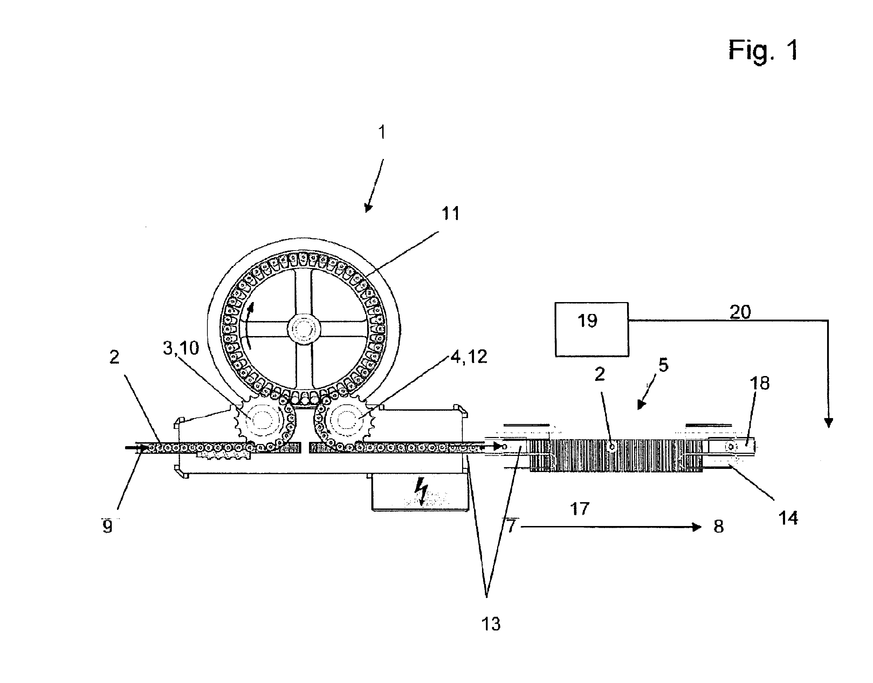

Figur 1 zeigt eine Abfüllanlage 1 für Behälter 2, die über eine Zuführvorrichtung 3 einer Füllvorrichtung zugeführt und über eine Ausführvorrichtung 4 ausgeführt werden. Es ist zumindest eine Messeinrichtung 5 zumindest zum Wiegen der befüllten Behälter 2 vorgesehen. Die Messeinrichtung 5 ist aus einer Vielzahl umlaufender Messaufnehmer 6 gebildet, auf welcher die Behälter 2 bodenseitig aufstehend von einer Einlaufseite 7 zu einer Auslaufseite 8 transportiert und gleichzeitig gewogen werden, wobei die Messaufnehmer 6 synchron zum Behälterfluss zirkulieren.

Die Abfüllanlage 1 ist beispielhaft in einer rotierenden Bauart ausgeführt, was bedeutet, dass die Behälter 2 über einen Stetigförderer 9 der als Einleitstern 10 ausgeführten Zuführvorrichtung 3 zugeführt werden. Der Einleitstern 10 übergibt die Behälter 2 an einen Füllstern 11 an welchen die Füllvorrichtung oder mehrere Füllvorrichtungen angeordnet ist bzw. sind. Die gefüllten Behälter 2 gelangen in die als Ausleitstern 12 ausgeführte Ausführvorrichtung 4 und von dort auf einen Stetigförderer 13.

Wie beispielhaft dargestellt ist die Messeinrichtung 5 dem der Ausführvorrichtung 4 nach geschalteten Stetigförderer 13 zugeordnet. Der Übersicht wegen sind nur einzelne Behälter 2 auf der Messeinrichtung 5 aufstehend gezeigt. Selbstverständlich stehen auf der Messeinrichtung 5 mehrere Behälter 2 in einem ungeordneten Abstand zueinander auf. Weiter schließt die Messeinrichtung 5 direkt an den Stetigförderer 13 an. Natürlich ist der Stetigförderer 13 nicht wie dargestellt in unterschiedlichen Dimensionen ausgeführt.

Die Behälter 2 sind beispielhaft als Flaschen, zum Beispiel als Glasflaschen oder als Kunststoffflaschen bevorzugt mit einem in Umfangsrichtung nicht unterbrochenen Boden bzw. bodenseitig mit einer in Umfangsrichtung ebenen Aufstandsfläche ausgeführt.

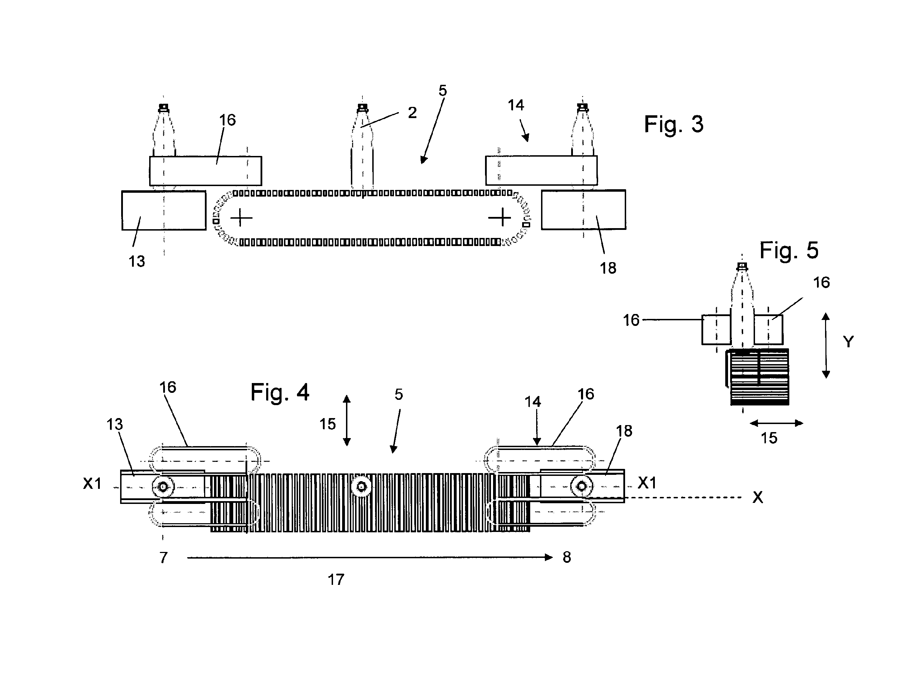

Die Messeinrichtung 5 weist einlassseitig und auslassseitig Führungselemente 14 auf, welche bezogen auf eine Mittelachse X (Figur 4) seitlich versetzt angeordnet sind. Die jeweiligen Führungselemente 14 weisen in einer Querrichtung 15 zueinander beabstandete Führungsbaken 16 auf, deren Abstand an einen Durchmesser der Behälter 2 so angepasst ist, dass die jeweiligen Behälter 2 in einer Transportrichtung (Pfeil 17, Figur 4) gesehen hintereinander angeordnet also geradlinig auf der Messeinrichtung 5 transportiert werden. Die Transportlinie ist mittels der gestrichelten Linie X1 dargestellt. Denkbar ist, die Führungsbacken 16 in Querrichtung 15 verstellbar auszuführen, so dass sich diese an unterschiedliche Durchmesser unterschiedlicher Behältertypen einstellen lassen, denn mit einer Füllanlage können natürlich auch mehrere Behältertypen befüllt werden, wobei vorzugsweise eine Serienabfüllung gleicher Behältertypen durchgeführt wird. In dem in Figur 4 dargestellten Ausführungsbeispiel ist die in der Zeichnungsebene jeweils obere Führungsbacke 16 vollständig seitlich zu den Messaufnehmern 6 angeordnet. In Figur 5 ist gezeigt, dass die Führungsbacken 16 in einer Hochrichtung Y einen Spalt zu den Aufstandflächen der Messaufnehmer 6 aufweisen. Das einlassseitige Führungselement 14 verhindert, dass Behälter in der Querrichtung 15 gesehen nebeneinander auf der Messeinrichtung 5 transportiert werden, wobei dass auslassseitige Führungselement 14 eine hintereinander angeordnete Übergabe der Behälter 2 auf einen nach geschalteten Stetigförderer 18 bewirkt. Weiter können die Führungselemente 14 als Umfallsicherung dienen, um ein Umfallen der Behälter 2 zu vermeiden, wenn diese dem Behälterfluss entsprechend auf die Messeinrichtung 5 überführt und von dieser auf einen nach geschalteten Transporteur übergeben werden. Zudem kann eine der Führungsbacken 16 des auslassseitigen Führungselementes 14 noch als Ausleitvorrichtung nicht eichgerecht gefüllter Behälter 2 wirken, worauf weiter unten noch eingegangen wird.

Die Führungselemente 14 sind beispielhaft so angeordnet, dass diese die jeweiligen Stetigförderer 13 und 18 und die Messeinrichtung 5 übergreifen.

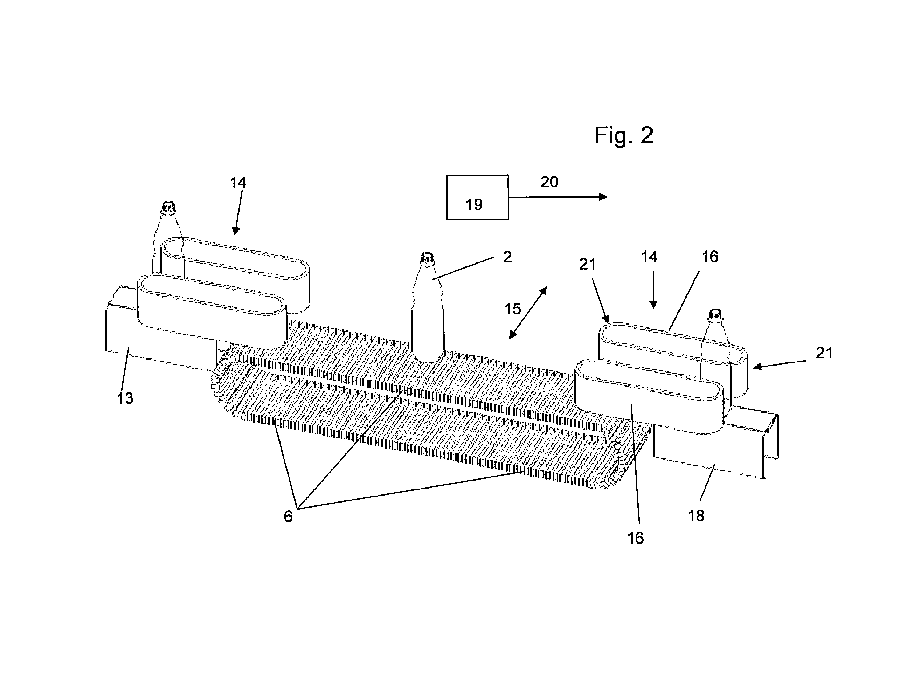

Die Messaufnehmer 6 sind quer zur Transportrichtung 17 angeordnet und erfindungsgemäß als schmale Messfinger (oder Stäbe) Stäbe so ausgebildet, dass ein Behälter 2 auf mehreren Messaufnehmern 6 bodenseitig aufsteht. Eine Aufstandsfläche der Messaufnehmer 6 sollte eben ausgeführt sein. Wie in Figur 2 beispielhaft dargestellt, steht der beispielhafte Behälter 2 bodenseitig auf vier Messaufnehmern 6 auf. Größere Behälter können auf mehr als vier Messaufnehmern 6 und kleinere auf weniger Messaufnehmern 6 aufstehen.

Die Messeinrichtung 5 ist mit ihrer Vielzahl zueinander beabstandeter Messaufnehmer 6 quasi als Laufband mit Obertrum und Untertrum gebildet, wobei jeweils einlaufseitig und auslaufseitig Umlenk- bzw. Antriebsvorrichtungen vorgesehen sind.

Die Messeinrichtung 5 bzw. die einzelnen Messaufnehmer 6 zirkulieren dabei bevorzugt mit der gleichen Geschwindigkeit wie der Behälterfluss, was bedeutet, dass die Umlaufgeschwindigkeit der einzelnen Messaufnehmer 6 an die Geschwindigkeit der vor- bzw. nach geschalteten Stetigförderer 13 bzw. 18 angepasst ist. Natürlich ist die Umlaufgeschwindigkeit der Messeinrichtung 5 regelbar.

Um das Gewicht der aufstehenden Behälter 2 aufnehmen zu können, sind nicht dargestellte Messelemente vorgesehen, bzw. mit den Messaufnehmern 6 verbunden, welche eine Belastung, zum Beispiel eine Durchbiegung, eine Dehnung oder eine Kraft in der Längsachse (quer zur Transportrichtung 17) oder ein vergleichbares Signal der Messaufnehmer 6 bzw. der einzelnen Messfinger detektieren können. Derartige Messelement angeordnet, so dass das Gewicht des auf mehgenommen wird und diesem zugeordnet werden kann.

Die Messelemente sind bevorzugt drahtlos mit einer Auswerteeinheit 19 verbunden, in welcher Referenzdaten bzw. Soll-Daten bezüglich der einzufüllenden Menge und das Behältertyps (Gewicht) abgelegt sind. Mittels der aufgenommenen Ist-Daten wird ein Vergleich durchgeführt, wodurch auf ein genaues Füllvolumen geschlossen werden kann. Die jeweils belasteten Messaufnehmer 6 bzw. die entsprechenden Messelemente sind entsprechend zusammenschaltbar bzw. übermitteln ihre Daten gemeinsam an die Auswerteeinheit 19, so dass das Gewicht des aufstehenden Behälters 2 bestimmbar ist. Günstig ist, wenn die gemeinsame Zuordnung der jeweiligen Messaufnehmer 6 bzw. der jeweiligen Messelemente zumindest bei einem Umlauf im Untertrum aufgehoben wird, und im Obertrum, also wenn wieder ein neuer, zu wiegender Behälter 2 auf möglicherweise anderen Messaufnehmern 6 aufsteht, eine neue Zusammenschaltung vorgenommen wird. Möglich ist aber auch, die Messaufnehmer 6 bzw. die Messelemente entsprechend der Produktlinie bei einem Einjustieren der Abfüllanlage direkt zuzuordnen, also zumindest den Obertrum entsprechend aufzuteilen; denn die Messeinrichtung kann so einstellbar sein, dass jeweils die gleichen Messaufnehmer 6 belastet werden, auch wenn eine ungeordnete, axiale Beabstandung der Behälter 2 vorliegt.

Um einen Leerbehälter wiegen zu können, ist sinnvoller Weise auch dem Stetigförderer 9 eine Messeinrichtung zugeordnet, welche bevorzugt identisch zu der bereits beschriebenen Messeinrichtung 6 ausgeführt ist. Die aufgenommen Daten (Leergewicht des Behälters 2) werden der Auswerteeinheit 19 zugeführt und dort abgelegt. Die Messelemente dieser Messeinrichtung können bevorzugt drahtlos mit einer Empfangseinheit verbunden sein, wobei die Empfangseinheit mit der Auswerteeinheit 19 verbindbar ist, so dass die Daten an diese übergeben werden können. Erreicht der betreffende, aber gefüllte Behälter 2 nun die Messeinrichtung 6 wird dessen Gesamtgewicht aufgenommen, das entsprechende Messsignal an die Auswerteeinheit 19 geleitet, und dort in Relation zu dem abgelegten Leergewicht des betreffenden Behälters 2 gesetzt, so dass das Füllvolumen exakt bestimmbar ist, ohne dass das Ergebnis durch Behältertoleranzen beeinflusst ist.

Detektiert die Auswerteeinheit 19 nun einen nicht eichgerecht bzw. normgerecht befüllten Behälter 2, wird ein entsprechendes Ausleitsignal an eine Ausleitvorrichtung gesendet, welche den betreffenden, unter- oder überfüllten Behälter 2 aus dem Behälterfluss aussortiert. Die Ausleitvorrichtung kann der Messeinrichtung 6 nach geschaltet sein. Dies ist symbolisch mittels des Pfeils 20 gezeigt.

Die entsprechenden Behälter 2 werden auf der Messeinrichtung 5 aussortiert. Zweckmäßiger weise sind die Messaufnehmer 6 hierzu quer zur Transportrichtung verlagerbar bzw. verschieblich gelagert, so dass der betreffende Behälter 2 durch ein Verschieben der entsprechenden Messaufnehmer aus dem Behälterfluss aussortiert werden kann. Hierbei leitet die Auswerteeinheit 19 ein entsprechendes Signal an eine nicht dargestellte Steuereinheit, welche ein entsprechendes Verlagern der betreffenden Messaufnehmer 6, also der Messaufnehmer 6, auf welchen der nicht eichgerecht befüllte Behälter 2 aufsteht, bewirkt. Der "zur Seite" gestellte Behälter 2, also der Behälter welcher dann zu der Linie X1 seitlich versetzt ist, wird dabei zunächst in Transportrichtung 17 weitertransportiert und auslassseitig entfernt, wozu auslassseitig eine entsprechende Aussortiervorrichtung, z.B. in der Ausgestaltung eines Ausleitelementes angeordnet sein kann, welche die betreffenden Behälter auf einen weiterführenden Transporteur leitet.

Bei dem in Figur 4 dargestellten Ausführungsbeispiel würden die betreffenden Messaufnehmer 6 mit dem darauf aufstehenden nicht eich- bzw. normgerecht gefüllten Behälter 2 in der Zeichnungsebene nach unten verschoben, und in Transportrichtung 17 weitertransportiert, bis diese die in der Zeichnungsebene untere Führungsbacke 16 erreichen. Die in der unteren Zeichnungsebene gezeigte Führungsbacke 16 kann also zusätzlich zu der oben genannten Ausrichtfunktion noch eine Ausleitfunktion zum Ausleiten nicht eich- bzw. normgerecht gefüllter Behälter aufweisen. Vorteilhaft sind die jeweiligen Stirnseiten 21 der jeweiligen Führungsbacken 16 daher verrundet ausgeführt. Die verlagerten Messaufnehmer 6 können dann bevorzugt im Untertrum in ihre ursprüngliche Position zurückgeführt werden.

Natürlich können die Inspektionsergebnisse der Messeinrichtung 5 auch zum Nachjustieren der Füllvorrichtungen verwendet werden, so dass quasi eine selbst einstellbare Abfüllanlage 1 erreichbar wäre.

### Bezugszeichenliste

- 1: Abfüllanlage
- 2: Behälter
- 3: Zuführvorrichtung
- 4: Ausführvorrichtung
- 5: Messeinrichtung
- 6: Messaufnehmer
- 7: Einlaufseite
- 8: Auslaufseite
- 9: Stetigförderer
- 10: Einleitstern
- 11: Füllstern
- 12: Ausleitstern
- 13: Stetigförderer
- 14: Führungselemente
- 15: Querrichtung
- 16: Führungsbacken
- 17: Transportrichtung
- 18: Stetigförderer
- 19: Auswerteeinheit
- 20: Pfeil
- 21: Stirnseiten
- X: Mittelachse
- X1: Transportlinie
- Y: Hochrichtung

## Patentansprüche

1. Messeinrichtung zum Wiegen von Behältern, welche aus einer Vielzahl umlaufender Messaufnehmer (6) gebildet ist, auf welcher die Behälter (2) bodenseitig aufstehend von einer Einlaufseite (7) zu einer Auslaufseite (8) transportiert und gleichzeitig gewogen werden, wobei die Messaufnehmer (6) synchron zu einem Behälterfluss eines Transporteurs zirkulieren, wobei die Messaufnehmer (6) quer zur Transportrichtung (17) angeordnet und als Messfinger ausgeführt sind, so dass eine Multifinger-Messeinrichtung gebildet ist, wobei die einzelnen Messfinger so beabstandet sind, dass quasi ein Laufband mit Obertrum und Untertrum gebildet ist, **dadurch gekennzeichnet, dass** an jedem Messaufnehmer (6) ein Messelement, welches eine Belastung detektieren kann, angeordnet ist, und dass die Messelemente mit einer Auswerteeinheit (19) verbunden sind, sodass nicht eichgerecht gefüllte Behälter (2) erkannt werden können, wobei die nicht eichgerecht gefüllten Behälter (2) auf der Messeinrichtung zum Wiegen der Behälter aussortiert werden.

2. Abfüllanlage für Behälter (2), die über eine Zuführvorrichtung (3) einer Füllvorrichtung zugeführt und über eine Ausführvorrichtung (4) ausgeführt werden, wobei zumindest eine Messeinrichtung (5) gemäß Anspruch 1 zumindest zum Wiegen der befüllten Behälter (2) vorgesehen ist.

3. Abfüllanlage nach Anspruch 2, **dadurch gekennzeichnet, dass** die Messeinrichtung (5) so regelbar ist, dass die Behälter (2) von der Ausführvorrichtung (4) oder einem nach geschalteten Stetigförderer (13) mit der dem Behälterfluss gleichen Geschwindigkeit auf die Messeinrichtung (5) übergeben werden, wobei die Messeinrichtung (5) die Behälter (2) mit der dem Behälterfluss entsprechenden Geschwindigkeit von der Einlassseite (7) zur Auslassseite (8) transportiert.

4. Abfüllanlage nach Anspruch 2 oder 3, **dadurch gekennzeichnet, dass** die Messaufnehmer (6) als Messfinger (5) mit ebener Aufstandsfläche ausgeführt sind.

5. Abfüllanlage nach einem der Ansprüche 2 bis 4, **dadurch gekennzeichnet, dass** der Laufband im Obertrum und im Untertrum als ein horizontal angeordnetes Laufband gebildet ist.

6. Abfüllanlage nach einem der vorhergehenden Ansprüche 2 bis 5, **dadurch gekennzeichnet, dass** die Messelemente als Druckmessdose und/oder als Dehnungsmessstreifen ausgeführt sind.

7. Abfüllanlage nach einem der vorhergehenden Ansprüche 2 bis 6, **dadurch gekennzeichnet, dass** die Messaufnehmer (6) quer zur Transportrichtung verlagerbar gelagert sind.

8. Abfüllanlage nach einem der vorhergehenden Ansprüche 2 bis 7, **dadurch gekennzeichnet, dass** die Messeinrichtung (5) zumindest einlaufseitig ein Führungselement (14) aufweist, welches aus zwei in Querrichtung (15) beabstandeten Führungsbacken (16) gebildet ist.

9. Abfüllanlage nach einem der vorhergehenden Ansprüche 2 bis 8, **dadurch gekennzeichnet, dass** der Zuführvorrichtung (3) bzw. einem dieser vorgeschalteten Stetigförderer (9) eine weitere Messeinrichtung zum Wiegen eines leeren Behälters (2) zugeordnet ist.

## Claims

1. Measuring device for weighing containers, which is formed from a plurality of circulating measuring sensors (6), on which the containers (2) are transported standing upright on their bases from an inlet side (7) to an outlet side (8) and are weighed at the same time, wherein the measuring sensors (6) circulate in synchrony with a container flow of a transporter, wherein the measuring sensors (6) are arranged transversely to the transport direction (17) and are configured as measuring fingers, such that a multi-fingered measuring device is formed, wherein the individual measuring fingers are spaced apart from one another in such a way that in effect a running belt with an upper run and a lower run is formed, **characterised in that** a measuring element, which can detect a load, is arranged on each measuring sensor (6) and that the measuring elements are connected to an evaluation unit (19), such that any containers (2) which are not filled correctly in accordance with the calibration can be identified, and wherein the containers (2) which are not filled correctly in accordance with the calibration are screened out on the measuring device for measuring the containers.

2. Filling system for containers (2), which are conveyed in by means of a feed device (3) to a filling apparatus, and are conveyed out by means of a discharge apparatus (4), wherein at least one measuring device (5) according to claim 1 is provided at least for the weighing of the filled containers (2).

3. Filling system according to claim 2, **characterised in that** the measuring device (5) can be regulated in such a way that the containers (2) are transferred onto the measuring device (5) from the discharge apparatus (4) or from a downstream continuous conveyor (13) at the same speed as the container flow, wherein the measuring device (5) transports the containers (2) from the inlet side (7) to the outlet side (8) at the speed corresponding to the container flow.

4. Filling system according to claim 2 or 3, **characterised in that** the measuring sensors (6) are configured as measuring fingers (5) with a flat contact surface.

5. Filling system according to any one of claims 2 to 4, **characterised in that** the running belt is formed in the upper run and in the lower run as a horizontally arranged running belt.

6. Filling system according to any one of the preceding claims 2 to 5, **characterised in that** the measuring elements are configured as a pressure measuring box and/or as pressure measuring strips.

7. Filling system according to any one of the preceding claims 2 to 6, **characterised in that** the measuring sensors (6) are arranged so that they can be displaced transversely to the transport direction.

8. Filling system according to any one of the preceding claims 2 to 7, **characterised in that** the measuring device (5) comprises a guide element (14) at least on the inlet side, which is formed from two guide chucks (16) spaced apart from one another in the transverse direction (15).

9. Filling system according to any one of the preceding claims 2 to 8, **characterised in that** a further measuring device for weighing an empty container (2) is assigned to the feed device (3), or to a continuous conveyor (9) arranged upstream of the feed device.

## Revendications

1. Système de mesure servant à peser des contenants, lequel est formé à partir d'une pluralité de sondes de mesure (6) en rotation, sur lesquelles les contenants (2), debout sur le côté de fond, sont transportés depuis un côté d'entrée (7) en direction d'un côté de sortie (8) et sont pesés dans le même temps, dans lequel les sondes de mesure (6) circulent de manière synchrone avec un flux de contenants d'un transporteur, dans lequel les sondes de mesure (6) sont disposées de manière transversale par rapport à la direction de transport (17) et sont réalisées sous la forme de doigts de mesure de sorte qu'un système de mesure à doigts multiples soit formé, dans lequel les divers doigts de mesure sont espacés de telle sorte qu'une bande de roulement avec un brin supérieur et un brin inférieur est quasiment formée, **caractérisé en ce qu'**un élément de mesure, qui peut détecter une contrainte, est disposé au niveau de chaque sonde de mesure (6), et que les éléments de mesure sont reliés à une unité d'évaluation (19) si bien que des contenants (2) remplis de manière non conforme à l'étalonnage sont triés sur le système de mesure pour peser les contenants (2).

2. Installation de transvasement pour des contenants (2), qui sont amenés à un dispositif de remplissage par l'intermédiaire d'un dispositif d'amenée (3) et qui sont évacués par l'intermédiaire d'un dispositif d'évacuation (4), dans laquelle au moins un système de mesure (5) selon la revendication 1 est prévu au moins afin de peser les contenants (2) remplis.

3. Installation de transvasement selon la revendication 2, **caractérisée en ce que** le système de mesure (5) peut être régulé de telle manière que les contenants (2) sont transférés par le dispositif d'évacuation (4) ou par un convoyeur en continu (13) installé en aval, à la même vitesse que le flux de contenants, sur le système de mesure (5), dans laquelle le système de mesure (5) transporte les contenants (2) à la vitesse correspondant au flux de contenants depuis le côté d'entrée (7) en direction du côté de sortie (8).

4. Installation de transvasement selon la revendication 2 ou 3, **caractérisée en ce que** les sondes de mesure (6) sont réalisées sous la forme de doigts de mesure (5) avec une surface de support plane.

5. Installation de transvasement selon l'une quelconque des revendications 2 à 4, **caractérisée en ce que** la bande de roulement dans le brin supérieur et dans le brin inférieur est formée sous la forme d'une bande de roulement disposée de manière horizontale.

6. Installation de transvasement selon l'une quelconque des revendications précédentes 2 à 5, **caractérisée en ce que** les éléments de mesure sont réalisés sous la forme d'un dynamomètre et/ou sous la forme d'une jauge extensométrique.

7. Installation de transvasement selon l'une quelconque des revendications précédentes 2 à 6, **caractérisée en ce que** les sondes de mesure (6) sont montées de manière à pouvoir être déplacées de manière transversale par rapport à la direction de transport.

8. Installation de transvasement selon l'une quelconque des revendications précédentes 2 à 7, **caractérisée en ce que** le système de mesure (5) présente au moins, côté entrée, un élément de guidage (14), qui est formé à partir de deux mâchoires de guidage (16) espacées dans la direction transversale (15).

9. Installation de transvasement selon l'une quelconque des revendications précédentes 2 à 8, **caractérisée en ce qu'**un autre système de mesure servant à peser un contenant (2) vide est associé au dispositif d'amenée (3) ou à un convoyeur en continu (9) installé en amont de ce dernier.
